# EUROPEAN PATENT SPECIFICATION

(11) **EP 2 916 064 B1**
(45) Date of publication and mention of the grant of the patent: **17.11.2021**
(21) Application number: 15162476.4
(22) Date of filing: 25.12.2012
(51) Int. Cl.: F21V 8/00, H04N 1/028

(54) **LIGHT SOURCE DEVICE AND REFLECTOR SUPPORT STRUCTURE**
LICHTQUELLENVORRICHTUNG UND REFLEKTORTRAGSTRUKTUR
DISPOSITIF DE SOURCE DE LUMIÈRE ET STRUCTURE DE SUPPORT DE RÉFLECTEUR

(30) Priority: 07.02.2012 JP 2012024229; 21.06.2012 JP 2012140061; 21.06.2012 JP 2012140062
(43) Date of publication of application: 09.09.2015
(62) Divisional of application: 12867829.9
(73) Proprietor: Mitsubishi Electric Corporation, Chiyoda-ku Tokyo 100-8310 (JP)
(72) Inventor: Fujiuchi, Akiko, Tokyo, 100-8310 (JP); Ohama, Daisuke, Tokyo, 100-8310 (JP); Asano, Hiroyuki, Tokyo, 100-8310 (JP)
(74) Representative: Sajda, Wolf E.

(56) References cited:
- EP-A1- 1 511 289
- JP-A- H03 274 855
- JP-A- H10 133 026
- JP-A- 2008 227 815
- JP-A- 2011 049 808
- JP-A- 2011 061 411
- US-A1- 2011 013 234

## Description

### Technical Field

The present invention relates to a light source device and a reflector support structure.

### Background Art

With light source devices used in image scanning devices and the like, as light sources increase in output, there is demand for an efficient light source heat-sink structure. In the past, light source devices like the following have been proposed.

For example, Patent Literature 1 describes a heat-sink structure for an image sensor using a linear light source device, having an LED chip 10 as a light source mounted on a metal plate 11, that dissipates heat from the light source by attaching a curved heat-sink 13 to a flat part on the reflecting face side of the LED chip 10.

For example, Patent Literatures 2 to 4 describe a sidelight-type light source device used to illuminate an image scanning device. In a sidelight-type light source device, an LED or other light source is placed on an end of a transparent light guide extending in the main scanning direction of the image scanning device. Light is incident from the end of the light guide, and the incident light is emitted from a side face of the light guide.

Patent Literatures 2 and 3 describe a light source device that places light sources on both end faces of the light guide. Patent Literature 4 describes a light source device that places a light source on one end face of the light guide. In addition, with the light source device described in Patent Literature 2, an optical filter is placed opposite on an end face of the light guide. With the light source device described in Patent Literatures 3 and 4, countermeasures are provided against expansion and contraction due to temperature changes near the light guide.

The light source devices described in Patent Literatures 5 to 9 are examples of a light source device that places a light source on one end face of a light guide. Patent Literature 5 describes a light guide that is tapered at the ends, whereas Patent Literatures 6 to 9 describe a light guide with curved ends. FIG. 10 of Patent Literature 9 illustrates a light source device in which both ends of the light guide are curved, and light sources are placed on both end faces of the curved light guide.

The LED array-type light source devices such as in Patent Literatures 10 to 12 are another example of a light source device used to illuminate an image scanning device. With an LED array-type light source device, light sources such as multiple LEDs are placed in the main scanning direction of the image scanning device. With the light source devices described in Patent Literatures 10 and 11, light emitted from LEDs is guided by a light guide member, and radiated onto a reflector. With the light source device described in Patent Literature 12, light emitted from LEDs is radiated onto a reflector.

Patent Literatures 10 to 12 also describe a reflector (a first reflecting mirror) constituting an image-forming optical system of an image scanning device. FIG. 5 of Patent Literature 11 illustrates a reflector (first reflecting mirror) supported by a carriage of an image scanning device.

Patent Literatures 13 and 14 also describe a reflector (first mirror) supported by a carriage of an image scanning device, and the reflector (first mirror) described in these Patent Literature is supported by a carriage on both ends.

### Citation List

### Patent Literature

Patent Literature 1: Unexamined Japanese Patent Application Kokai Publication JP-A-2008-227 815
Patent Literature 2: Unexamined Japanese Patent Application Kokai Publication JP-A-2008-028 617
Patent Literature 3: Unexamined Japanese Patent Application Kokai Publication JP-A-2010-103 742
Patent Literature 4: Unexamined Japanese Patent Application Kokai Publication JP-A-2011-061 411
Patent Literature 5: Unexamined Japanese Patent Application Kokai Publication JP-A-2006-085 975
Patent Literature 6: Unexamined Japanese Patent Application Kokai Publication JP-A-2010-021 983
Patent Literature 7: Unexamined Japanese Patent Application Kokai Publication JP-A-2007-201 845
Patent Literature 8: Unexamined Japanese Patent Application Kokai Publication JP-A-2004-266 313
Patent Literature 9: Unexamined Japanese Patent Application Kokai Publication JP-A-H11-055 476
Patent Literature 10: Unexamined Japanese Patent Application Kokai Publication JP-A-2011-211 464
Patent Literature 11: Unexamined Japanese Patent Application Kokai Publication JP-A-2011-049 808
Patent Literature 12: Unexamined Japanese Patent Application Kokai Publication JP-A-2007-318 406
Patent Literature 13: Unexamined Japanese Patent Application Kokai Publication JP-A-2002-135 533
Patent Literature 14: Unexamined Japanese Patent Application Kokai Publication JP-A-2004-279 663.

Other light source housings are known from JPH03274855, JP2011049808, US20110013234, and EP1511289 and comprise a light guide and a reflector.

Illuminating waveguides with side edge coupled light sources are known from JPH10133026.

### Summary of the Invention

### Technical Problem

However, with the linear light source device described in Patent Literature 1, the metal plate 11 and the heat-sink 13 are fixed in place by a flat spring in order to obtain an efficient heat-sink structure. For this reason, there is a problem in that the structure becomes complicated.

With light source devices for image scanning devices, as the image scanning devices become faster and higher in resolution, there is demand for brighter light sources and a supply of light that is uniform in both the lengthwise direction and the height direction. Also, when the object to be scanned by the image scanning device is a thick book placed on the receptacle (platen) of the image scanning device with a gap in between, shadow portions occur in the scanned image data. For this reason, conventionally, a reflector and a light guide are used to illuminate the object to be scanned from two light paths, as described in Patent Literatures 10 to 12.

However, with the reflector described in Patent Literatures 10 to 12, most of the back face of the reflector is supported, or the edges of the reflector are supported. For this reason, in the former case, there is a possibility that flexing or warping of the member that supports the reflector may have an effect on the reflector. In the latter case, there is a possibility that sagging due to the reflector's own weight or bowing of the reflector due to deformation of the supporting member may occur.

For example, in Patent Literature 10, a reflector 54 is held by a reflector bracket 59, the reflector bracket 59 and a light guide 53 are separately installed on a first frame 58, and the reflector (mirror) attachment face extends over the entire length. For this reason, there is a possibility of plate bending precision becoming worse. Furthermore, the structure becomes complicated.

A similar problem likewise exists for a reflector (first mirror) supported by a carriage of an image scanning device, as described in Patent Literatures 11, 13, and 14.

The present invention has been devised in light of the above circumstances, and takes as an objective to obtain a light source device having a simple structure and good precision.

### Solution to the Problem

In order to achieve the above objective, a light source device according to independent claims 1 or 2 is provided.

### Advantageous Effects of the Invention

According to the invention, it becomes possible to obtain a light source device having a simple structure and good precision.

### Brief Description of the Drawings

FIG. 1 is a perspective view of a light source device according to Embodiment 1 of the present invention;
FIG. 2 is an exploded view illustrating a configuration of a light source device according to Embodiment 1 of the present invention;
FIG. 3 is an exploded view illustrating a light source of a light source device according to Embodiment 1 of the present invention;
FIG. 4 is a top view as seen from the light output direction of a light source device according to Embodiment 1 of the present invention;
FIG. 5 is a cross-section view in the lengthwise direction of a light source device according to Embodiment 1 of the present invention;
FIG. 6A is a cross-section view in the widthwise direction of a light source device according to Embodiment 1 of the present invention;
FIG. 6B is a cross-section view in the widthwise direction of a light source device according to Embodiment 1 of the present invention;
FIG. 7 is a development view of a housing according to Embodiment 1 of the present invention;
FIG. 8A is a diagram illustrating a light path in a lengthwise cross-section of a light source device according to Embodiment 1 of the present invention;
FIG. 8B is a diagram illustrating a light path in a lengthwise cross-section of a light source device according to Embodiment 1 of the present invention;
FIG. 9 is a diagram illustrating a light path in a widthwise cross-section of a light source device according to Embodiment 1 of the present invention;
FIG. 10A is a cross-section view in the lengthwise direction near a light-emitting element of a light source device according to Embodiment 1 of the present invention;
FIG. 10B is a cross-section view in the lengthwise direction near a light-emitting element of a light source device according to Embodiment 1 of the present invention;

### Description of Embodiments

In this specification, the main scanning direction and the sub scanning direction (transport direction) of an image scanning device (image forming device) that incorporates a light source device and a reflector support structure according to the present specification are respectively designated the lengthwise direction and the widthwise direction of the light source device and reflector support structure.

Note that the long-edge direction of the housing of the light source device and reflector support structure corresponds to the lengthwise direction, and the short-edge direction of the housing of the light source device and reflector support structure corresponds to the widthwise direction. Worded differently, the main scanning direction is the direction in which a light source device according to this specification extends as a linear light source. That is, there is the main scanning direction (lengthwise direction, long-edge direction) and the sub scanning direction (widthwise direction, short-edge direction). This is in order to account for the case in which the housing of the light source device and reflector support structure is a square.

### Embodiment 1.

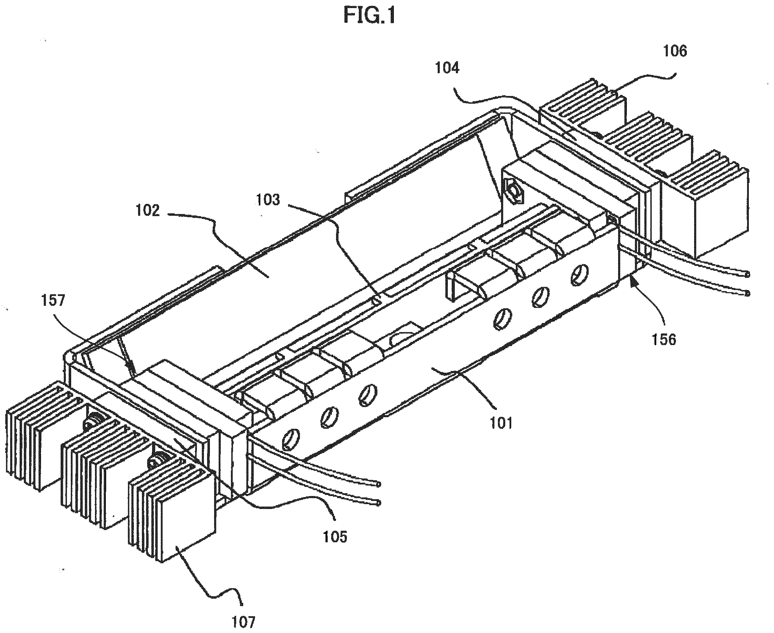

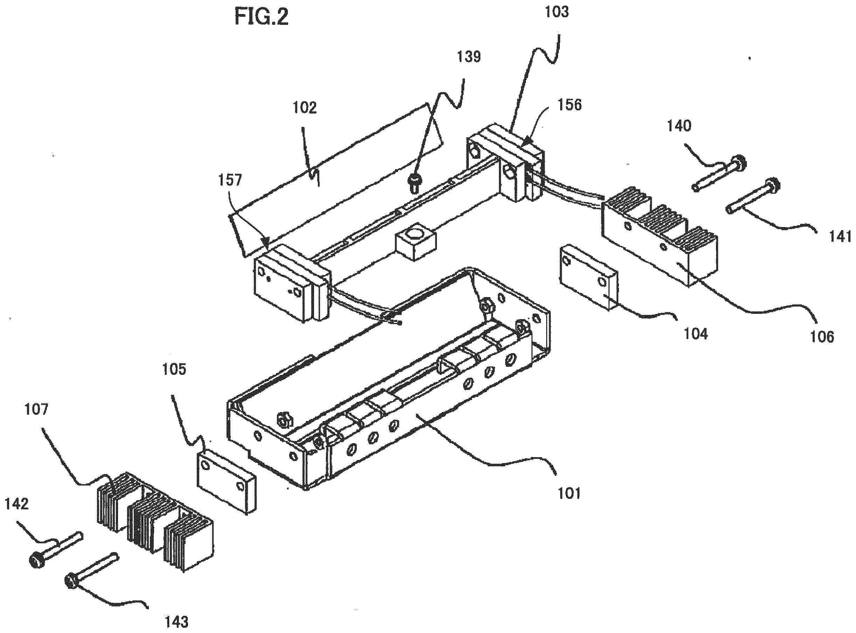

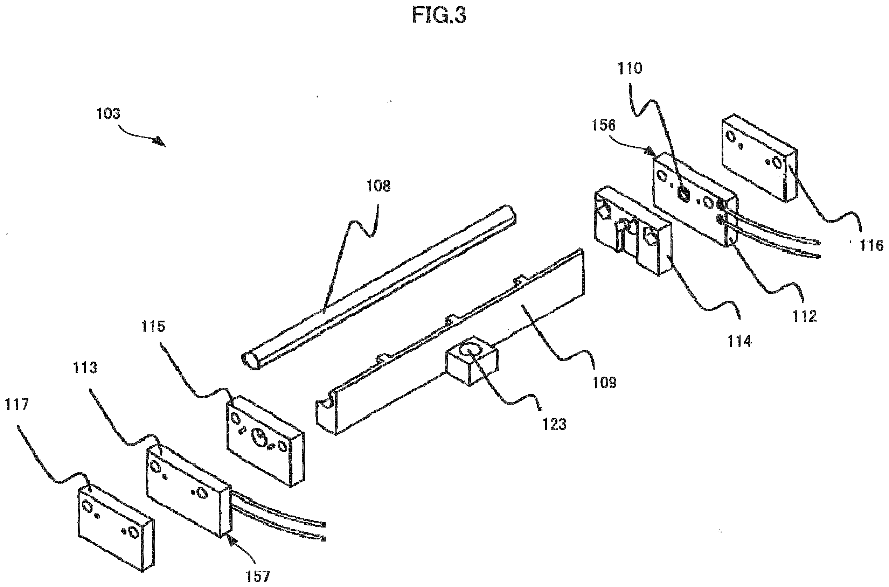

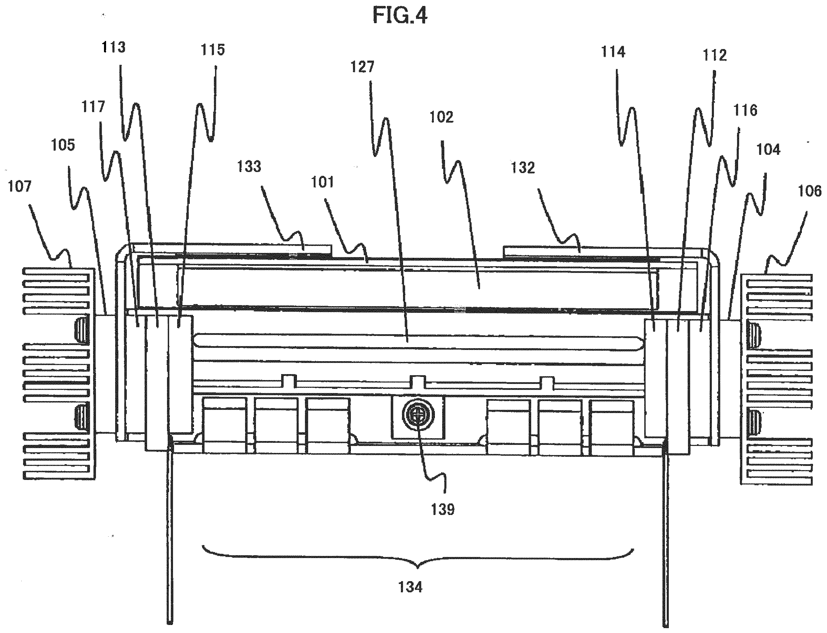

Embodiment 1 of the present invention will be described using the drawings. FIG. 1 is a perspective view of a light source device according to Embodiment 1 of the present invention. FIG. 2 is an exploded view illustrating a configuration of a light source device according to Embodiment 1 of the present invention. FIG. 3 is an exploded view illustrating a light source of a light source device according to Embodiment 1 of the present invention. FIG. 4 is a top view as seen from the light radiation direction of a light source device according to Embodiment 1 of the present invention.

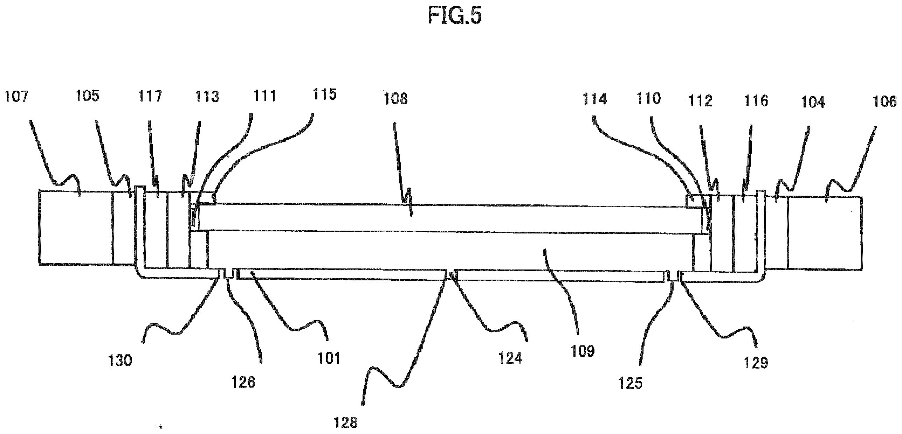

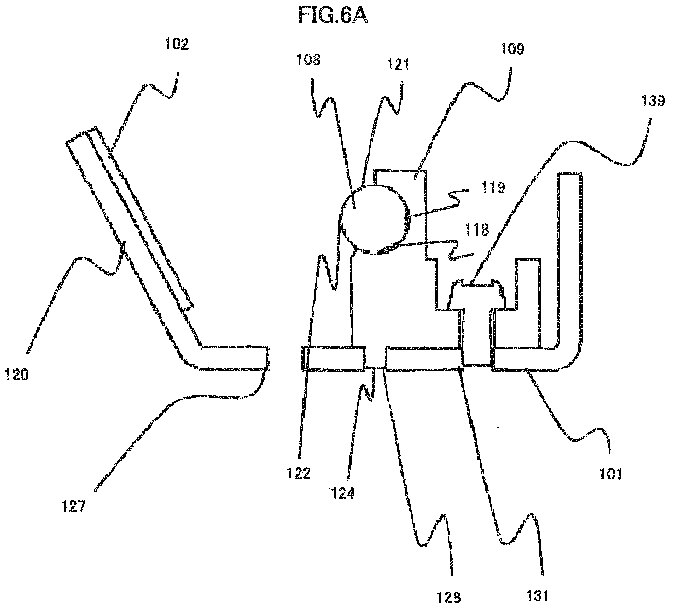

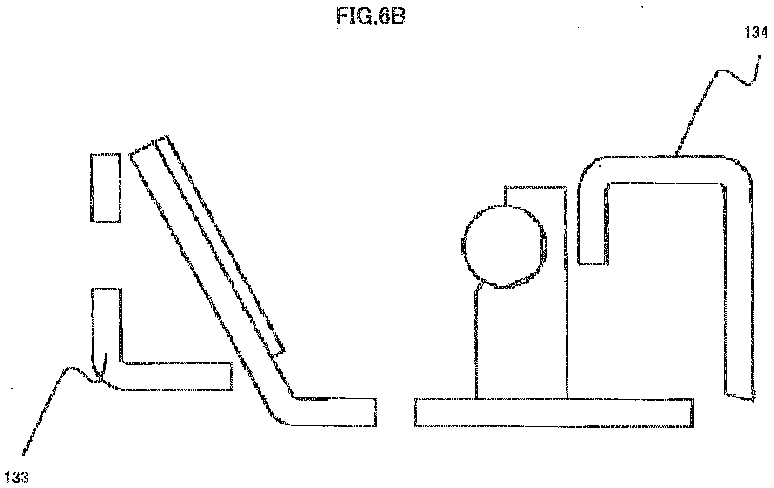

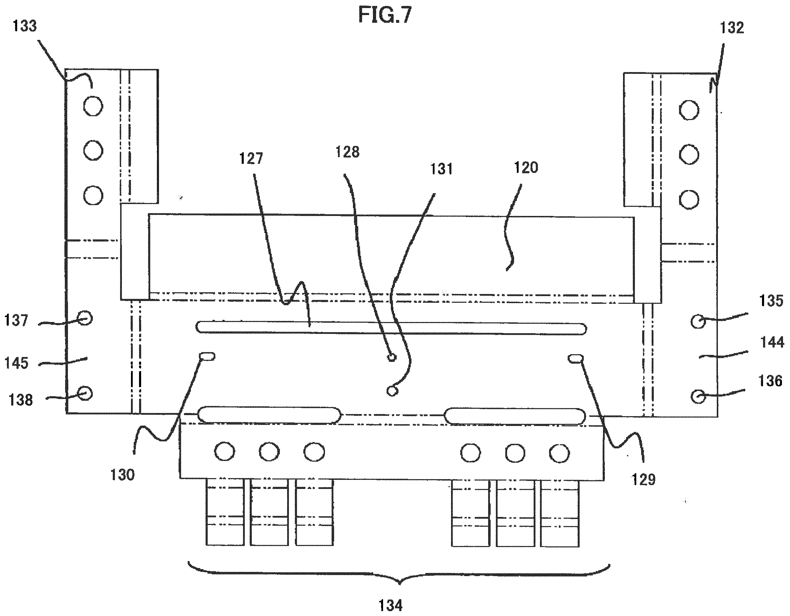

FIG. 5 is a cross-section view in the lengthwise direction of a light source device according to Embodiment 1 of the present invention. FIGS. 6A and 6B are cross-section views in the widthwise direction of a light source device according to Embodiment 1 of the present invention, in which FIG. 6A is a cross-section view at the center part in the lengthwise direction, and FIG. 6B is a cross-section view that includes wings. FIG. 7 is a development view of a housing according to Embodiment 1 of the present invention.

Configuration and operation of Embodiment 1 of the present invention will be described using FIGS. 1 to 7. As illustrated in FIGS. 1 and 2, a light source device of Embodiment 1 of the present invention mainly comprises a housing 101, a reflector (mirror) 102 and light source 103 housed inside the housing 101, and heat transfer bodies 104 and 105 as well as heat-sink fins 106 and 107 attached to the outside of the housing 101.

As illustrated in FIG. 3, the light source 103 comprises a light guide 108, a light guide holder 109 that houses the light guide 108, a light-emitting element 110 (111), substrates 112 and 113, holders 114 and 115, and heat transfer bodies 116 and 117. Note that a light emitter 156 comprises the light-emitting element 110 and the substrate 112, while a light emitter 157 comprises the light-emitting element 111 and the substrate 113.

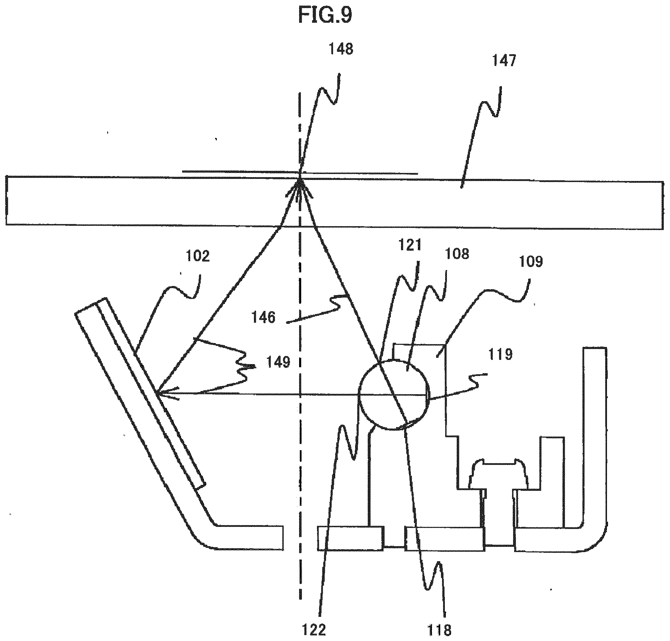

The light guide 108 is formed with a transparent resin, and is a columnar member extending in the lengthwise direction whose side-face shape forms a cylindrical shape. As illustrated in FIG. 9, the side faces of the light guide 108 include light scattering parts 118 and 119 in two places extending over the entire lengthwise direction. The side-face shape of the light guide 108 is not limited to a cylinder, and the end face of the light guide 108 is not limited to a circle.

A reflector 102, laid parallel to the light guide 108 in the lengthwise direction, reflects secondary light output from the light guide 108, and irradiates in the direction of a document receptacle. The reflector 102 comprises a vapor-deposited metal face or the like, and is a thin plate or sheet member extending in the lengthwise direction. The reflector 102 is kept at a suitable distance and angle with respect to the light guide 108 and the document receptacle by being affixed to a reflector support 120 of the housing 101 by adhesive bonding or the like.

The light-emitting element 110 is a light source element such as an LED light source that emits light incident on the end face (light inputter) on one side of the light guide 108. The light-emitting element 111 is a light source element such as an LED light source that emits light incident on the end face (light inputter) on the other side of the light guide 108. The light-emitting element 110 is affixed by soldering or the like to a substrate 112, such as an LED substrate, for example, and is current-driven by the substrate 112 to emit light. The light-emitting element 111 is affixed by soldering or the like to a substrate 113, such as an LED substrate, for example, and is current-driven by the substrate 113 to emit light.

The holder 114 holds the substrate 112 and the light guide 108, and suppresses unintentional light from the light-emitting element 110 and the light guide 108. An end that includes the end face on one side of the light guide 108 is inserted into the end face on one side of the holder 114, and the substrate 112 affixed with the light-emitting element 110 is placed on the end face on the opposite side of the holder 114 so that the light-emitting element 110 and the light guide 108 are opposite each other. Wavelength characteristics may also be adjusted by inserting a thin optical device with wavelength-converting properties, such as a filter, between the light-emitting element 110 and the light guide 108.

The holder 115 holds the substrate 113 and the light guide 108, and suppresses unintentional light from the light-emitting element 111 and the light guide 108. An end that includes the end face opposite the side of the light guide 108 held by the holder 114 is inserted into the end face on one side of the holder 115, and the substrate 113 affixed with the light-emitting element 111 is placed on the end face on the opposite side of the holder 115 so that the light-emitting element 111 and the light guide 108 are opposite each other.

The holders 114 and 115 form a shape in which a portion corresponding to the open side of a groove in a light guide holder 109 discussed later projects farther outward towards the light guide 108 compared to other portions.

The light guide holder 109 is formed with a highly reflective resin, metal, or the like, and is a member that holds the light guide 108 in the lengthwise direction. The light guide holder 109 includes a groove configured as a long groove in the lengthwise direction, and holds the light guide 108 in the lengthwise direction as a result of the light guide 108 being placed into this groove. The open side of this groove forms a light outputter that outputs light from the light guide 108.

The light guide holder 109 holds the light guide 108 at a suitable position with respect to the reflector 102 and the housing 101. In addition, the light guide holder 109 fulfills a role of returning bleeding light from the side faces or from the rear face of the light scattering part 118 and the light scattering part 119 back inside the light guide 108, and suppressing the output of unintentional light from other than the light outputter 121 and the light outputter 122.

The light guide holder 109 holds the light guide 108, is equipped with a screw hole 123 in the center of the lengthwise direction and on the opposite side of the reflector 102 in the widthwise direction (the outer side of the housing), and is equipped with a pin 124, a pin 125, and a pin 126 in the center of the lengthwise direction and on the side of the housing bottom face.

The housing 101 is formed by sheet metal (a planar member) with good heat dissipation, such as aluminum, and is formed into a box shape by being bent inwards along the two-dot chain lines in FIG. 7.

In other words, by being bent, there is formed a housing 101 that includes a floor having a rectangular shape, a long-edge wall bent inwards from the floor along the long edge on one side of the floor, a sloped face forming a slope bent inwards at a designated angle from the floor in the short-edge direction of the floor along the long edge on the other side of the floor, short-edge walls bent inwards from the floor along the short edges of the floor, and heat-sinks, continuous with the short-edge walls, bent in the long-edge direction, and extending in the long-edge direction facing in the opposite direction of the long-edge wall with respect to the sloped face.

Note that the heat-sinks may also be continuous with the short-edge walls, bent in the long-edge direction, and extending in the long-edge direction facing in the opposite direction of the sloped face with respect to the long-edge wall.

The housing 101 is equipped with an aperture 127 formed in the bottom face along the lengthwise direction, an interlocking hole 128, a long hole 129, a long hole 130, a screw hole 131, a wing 132 and a wing 133 that act as heat-sinks, fins 134, a holder holding hole 135, a holder holding hole 136, a holder holding hole 137, a holder holding hole 138, and a reflector support 120.

The light guide holder 109 is affixed to the housing 101 in the lengthwise direction, the widthwise direction, and the height direction by passing a screw 139 through the screw hole 123, and affixing the screw 139 to the screw hole 131 of the housing 101. The holder 114, the substrate 112, the heat transfer body 116, the heat transfer body 104, and the heat-sink fins 106 are affixed to the short-edge wall 144 of the housing 101 using screws 140 and 141 to form a heat-sink face.

The holder 115, the substrate 113, the heat transfer body 117, the heat transfer body 105, and the heat-sink fins 107 are affixed to the short-edge wall 145 on the side of the housing 101 opposite the short-edge wall 144 using screws 142 and 143 to form a heat-sink face. The reflector 102 is affixed to the reflector support 120 by adhesive bonding or the like.

The aperture 127 is a hole (reflected light passage hole) formed along the lengthwise direction and positioned in the widthwise center part of the bottom face of the housing 101. The aperture 127 conveys image information about the object to be scanned (light among the radiated light that was scattered and reflected by the object to be scanned) to the imager (a lens and image sensor), and suppresses all other unwanted light.

The interlocking hole 128 is a round hole provided on the bottom face of the housing 101. The interlocking hole 128 is positioned in the center of the lengthwise direction, and in addition, in the center of the bottom face of the light guide holder 109 between the aperture 127 and the fins 134 in the widthwise direction. The pin 124 of the light guide holder 109 is inserted into the interlocking hole 128, thereby affixing the position of the light guide holder 109 in the lengthwise direction and the widthwise direction.

The long hole 129 is a hole elongated in the lengthwise direction and provided in the bottom face of the housing 101. The long hole 129 is positioned at one end in the lengthwise direction, and in addition, in the center of the bottom face of the light guide holder 109 between the aperture 127 and the fins 134 in the widthwise direction. The pin 125 of the light guide holder 109 is inserted into the long hole 129, thereby affixing the position of the light guide holder 109 in the widthwise direction.

The long hole 130 is a hole elongated in the lengthwise direction and provided in the bottom face of the housing 101. The long hole 130 is positioned at the end on the side opposite the long hole 129 in the lengthwise direction, and in addition, in the center of the bottom face of the light guide holder 109 between the aperture 127 and the fins 134 in the widthwise direction. The pin 126 of the light guide holder 109 is inserted into the long hole 130, thereby affixing the position of the light guide holder 109 in the widthwise direction.

The screw hole 131 is a round hole provided in the bottom face of the housing 101. The screw hole 131 is positioned in the center of the lengthwise direction, and in addition, between the interlocking hole 128 and the fins 134 in the widthwise direction. The screw hole 131 is positioned below the screw hole 123 of the light guide holder 109, and the screw 139 transfixes the screw hole 123 and the screw hole 131.

The wing 132 extends along a housing side face, is positioned on the outer side of the reflector 102 with respect to the aperture 127, and dissipates heat from the light-emitting element 110. The wing 133 extends along a housing side face, is positioned on the outer side of the reflector 102 with respect to the aperture 127, and dissipates heat from the light-emitting element 111.

The fins 134 extend along a housing side face, are positioned on the opposite side of the reflector 102 with respect to the aperture 127, and dissipate heat from the light-emitting element 110 and the light-emitting element 111.

The holder holding hole 135 and the holder holding hole 136 are holes for affixing the substrate 112, the holder 114, the heat transfer body 116, the heat transfer body 104, and the heat-sink fins 106 to the housing 101 with the screw 140 and the screw 141. The holder holding hole 137 and the holder holding 138 are holes for affixing the substrate 113, the holder 115, the heat transfer body 117, the heat transfer body 105, and the heat-sink fins 107 to the housing 101 with the screw 142 and the screw 143.

The light guide holder 109 takes a suitable position with the housing at the following four points on the housing 101. Namely, the pin 124 is inserted into the interlocking hole 128, the pin 125 is inserted into the long hole 129, the pin 126 is inserted into the long hole 130, and the screw hole 123 and screw hole 131 are affixed by the screw 139.

The light guide holder 109 is shorter than the total length of the light guide 108. The end faces of the light guide holder 109 face the end faces of the holder 114 and the holder 115, and the gap length thereof is longer than the amount of expansion due to the temperature characteristics of the light guide holder 109. As discussed earlier, since the long hole 129 and the long hole 130 are long holes, and the pin 125 and pin 126 are not affixed in the lengthwise direction, the light guide 108 may be held in the widthwise direction without bowing, even in the case in which the light guide holder 109 stretches due to temperature.

The heat transfer body 104, the heat transfer body 105, the heat transfer body 116, and the heat transfer body 117 are members with good adhesion and thermal conductivity, and comprise a sheet-like silicon sheet or the like that works to transfer heat, for example.

The heat-sink fins 106 and the heat-sink fins 107 are formed by a metal with good thermal conductivity such as aluminum, and are fabricated by extrusion molding or the like. Heat from the light-emitting element 110 and the light-emitting element 111 is dissipated via a path in which heat passes from the housing 101 through the heat transfer body 104 and the heat transfer body 105, and is dissipated from the heat-sink fins 106 and the heat-sink fins 107.

The housing 101 has a role of allowing heat from the light-emitting element 110 and the light-emitting element 111 to escape.

Heat from the light-emitting element 110 is transferred to the substrate 112 from the junction plane of the light-emitting element 110 and the substrate 112, transferred to the heat transfer body 116 from the junction plane of the substrate 112 and the heat transfer body 116, and transferred inside the housing 101 from the short-edge wall 144 that acts as the junction plane of the heat transfer body 116 and the housing 101.

Subsequently, heat transferred to the housing 101 is dissipated via any of a path in which heat is dissipated from the wing 132, wing 133, and fins 134 of the housing 101, a path in which heat passes from the housing 101 to the heat transfer body 104 and is dissipated via the heat transfer body 104 and the heat-sink fins 106, and a path in which heat passes from the housing 101 to the heat transfer body 105 and is dissipated via the heat transfer body 105 and the heat-sink fins 107.

Heat from the light-emitting element 111 is transferred to the substrate 113 from the junction plane of the light-emitting element 110 and the substrate 113, transferred to the heat transfer body 117 from the junction plane of the substrate 113 and the heat transfer body 117, and transferred inside the housing 101 from the short-edge wall 145 that acts as the junction plane of the heat transfer body 117 and the housing 101.

Subsequently, heat transferred to the housing 101 is dissipated via any of a path in which heat is dissipated from the wing 132, wing 133, and fins 134 of the housing 101, a path in which heat passes from the housing 101 to the heat transfer body 104 and is dissipated via the heat transfer body 104 and the heat-sink fins 106, and a path in which heat passes from the housing 101 to the heat transfer body 105 and is dissipated via the heat transfer body 105 and the heat-sink fins 107.

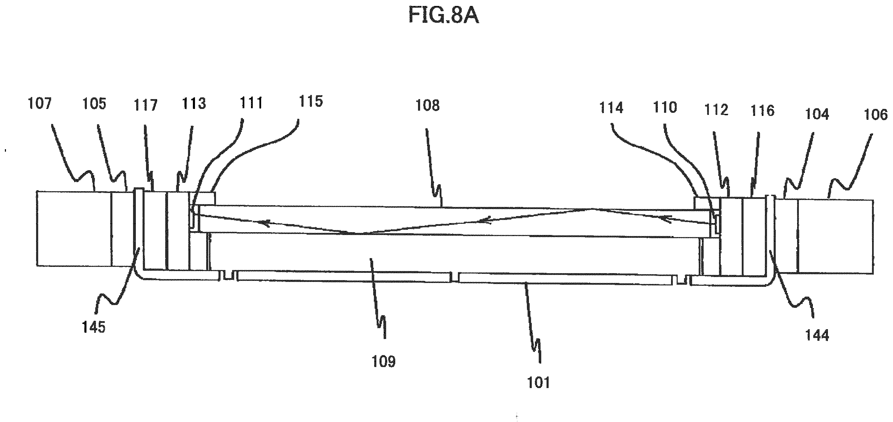

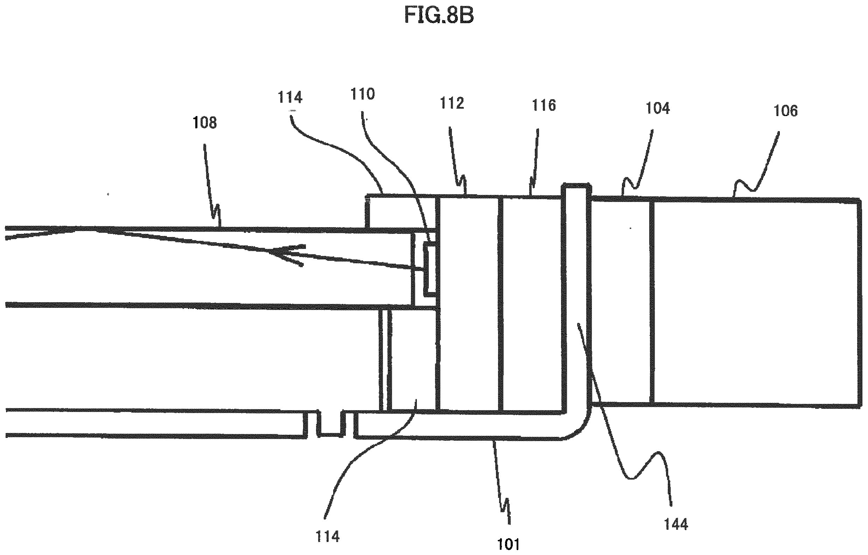

FIGS. 8A and 8B are diagrams illustrating a light path as seen from a cross-section in the lengthwise direction of a light source device according to Embodiment 1 of the present invention. FIG. 8A is an overall view, while FIG. 8B is an enlarged view near the light-emitting element. FIG. 9 is a diagram illustrating a light path in a widthwise cross-section view of a light source device according to Embodiment 1 of the present invention.

As indicated by the arrow in FIG. 8, light input into the light guide 108 from the light-emitting element 110 and the light-emitting element 111 proceeds while being repeatedly reflected off the wall face of the light guide 108, and part of the light is incident on the light scattering part 118 and the light scattering part 119 having a white printed pattern or uneven shape formed along the lengthwise direction of the light guide 108.

As illustrated in FIG. 9, light incident on the light scattering part 118 is radiated by reflection in the direction of an irradiated part 148 of a document receptacle 147 as a line of primary light 146 extending in the lengthwise direction from the light outputter 121 (the part on the surface of the light guide 108) facing opposite the light scattering part 118.

Since the holders 114 and 115 form a shape in which a portion corresponding to the open side of the groove in the light guide holder 109 projects farther outward towards the light guide 108 compared to other portions, non-uniform light at the ends of the light guide 108 is not output from the light guide 108.

Meanwhile, as illustrated in FIG. 9, light incident on the light scattering part 119 is output by reflection towards the reflector 102 as a line of secondary light 149 extending in the lengthwise direction from the light outputter 121 (the surface of the light guide 108 on the reflector 102 side) facing opposite the light scattering part 119. The secondary light 149 output towards the reflector 102 is reflected by the reflector 102, and output in the direction of the irradiated part 148 of the document receptacle 147 as a line of secondary light 149 extending in the lengthwise direction. The arrows proceeding from the light scattering part 118 and the light scattering part 119 of the light guide 108 to the document receptacle 147 depicted in the central cross-section respectively indicate the primary light paths along which light reflected by the light scattering part 118 and the light scattering part 119 irradiates the object to be scanned.

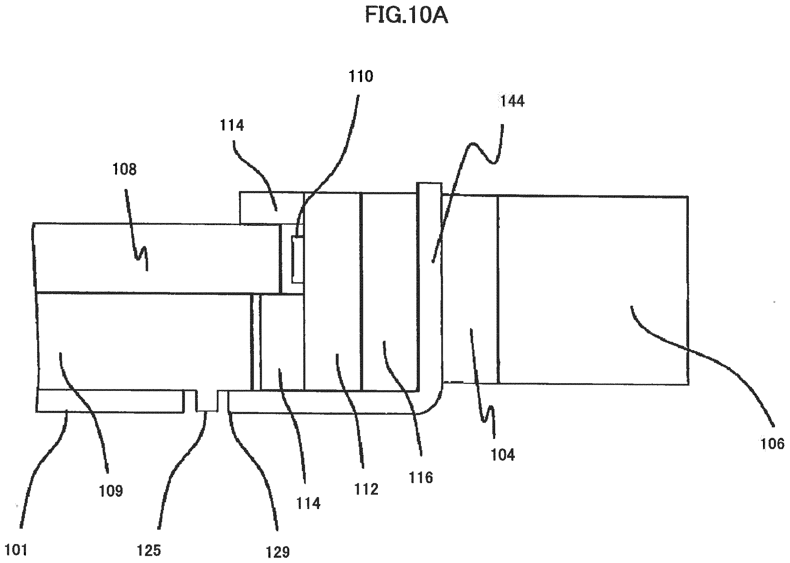

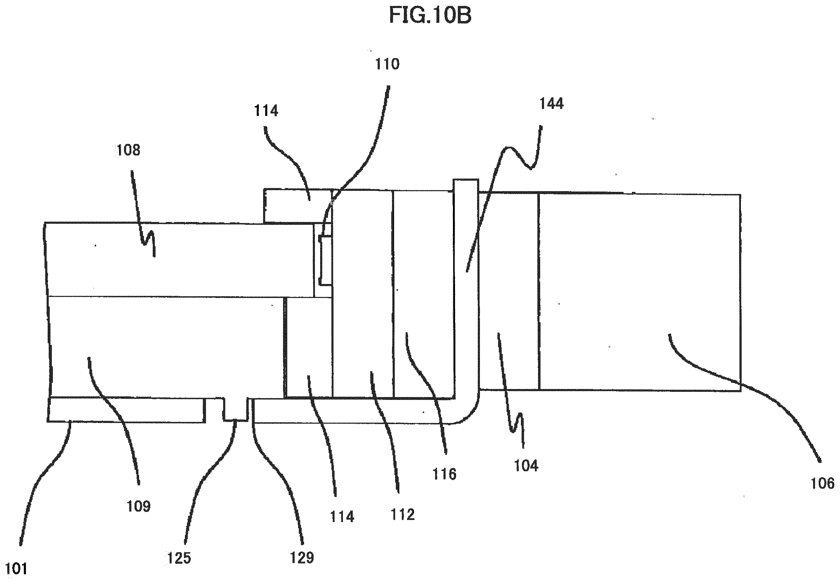

FIGS. 10A and 10B are cross-section diagrams in the lengthwise direction near a light-emitting element of a light source device according to Embodiment 1 of the present invention. FIG. 10A is a cross-section view at normal temperature, while FIG. 10B is a cross-section view at high temperature. At both normal temperature and high temperature, the distances of the housing 101, the heat transfer body 116, the substrate 112, the light-emitting element 110, and the holder 114 are constant, whereas the degree of interlocking between the light guide 108 and the holder 114 varies while the relative positions of the light guide holder 109 and the holder 114 also vary. At high temperature, the spacing between the light guide 108 and the light-emitting element 110, and the spacing between the light guide holder 109 and the holder 114, narrow compared to normal temperature.

Since the long hole 129 of the housing 101 has a gap corresponding to the temperature-related stretching of the light guide holder 109 in the lengthwise direction as discussed earlier, the pin 125 of the light guide holder 109 slides in the lengthwise direction of the long hole 129. Consequently, even if the light guide 108 stretches in the lengthwise direction, the positions of the light guide 108 and the light guide holder 109 in the height direction and the widthwise direction do not vary, and as a result, the illumination characteristics do not change.

Also, since the position of the holder 114 in the lengthwise direction with respect to the housing 101 is fixed by the screw 140 and the screw 141, the heat dissipation effects also do not change. In other words, there is obtained a light source device whose illumination characteristics and heat dissipation characteristics do not change according to stretching of the light guide 108 due to temperature changes. Note that although the holder 114 is described with reference to FIGS. 10A and 10B, the operational advantages of the holder 115 are similar.

In this way, according to Embodiment 1 of the present invention, heat from the light-emitting elements 110 and 111 is transferred to the short-edge walls 144 and 145 of the housing via the heat transfer bodies 116 and 117. Since the housing 101 is integrally formed by bending sheet metal, heat transferred to the short-edge walls 144 and 145 is transferred to the housing 101 overall, including the heat-sinks (wings) 132 and 133, with little thermal resistance. As a result, it becomes possible to efficiently exhaust heat from the light-emitting elements 110 and 111.

In addition, since the holders 114 and 115 are affixed to the short-edge walls 144 and 145 of the housing 101, it becomes possible to maintain the illumination characteristics and heat dissipation characteristics without change, even in the case in which the light guide 108 stretches due to temperature changes.

### List of Reference Signs

- 101: Housing
- 102: Reflector
- 103: Light source
- 104, 105,: Heat transfer body
- 106, 107: heat-sink fins
- 108,: Light guide
- 109,: Light guide holder
- 110, 111,: Light-emitting element
- 112, 113,: Substrate
- 114, 115,: Holder
- 118, 119,: Light scattering part
- 120,: Reflector support
- 121,: Light outputter
- 123, 131,: Screw hole
- 124, 125, 126,: Pin
- 127,: Aperture
- 128,: Interlocking hole
- 129, 130,: Long hole
- 132, 133: Wing
- 134: Fins
- 135, 136, 137, 138,: Holder holding hole
- 139, 140, 141, 142, 143,: Screw
- 144, 145: Short-edge wall
- 156, 157,: Light emitter

## Claims

1. A light source device comprising:
a housing (101) that is formed by a sheet metal with good heat dissipation and includes a floor, standing walls (144,145) bent inwards from the floor and standing off the floor, and a sloped face (120) provided in a direction orthogonal to the standing walls and bent inwards at a designated angle from the floor, having a reflecting member (102) laid thereon;
a light guide (108), placed on the inner side of the housing (201)and extending in a direction orthogonal to the standing walls that is adapted to output primary light that is output towards an irradiated part, and secondary light that is output towards the sloped face and is adapted to reflect off the sloped face and to irradiate the irradiated part;
wherein the floor has a rectangular shape, and the housing further includes a long-edge wall bent inwards from the floor along one of the long edges of the floor, and wherein the standing walls walls are bent inwards from the floor along short edges of the floor, and the sloped face is bent inwards from the floor along the other long edge of the floor at a designated angle with respect to the short-edge direction of the floor, the light source device being **characterised in that** light emitters (156, 157) are provided on opposite sides of the light guide in a direction orthogonal to the standing walls and placed in contact with the standing walls, and **in that** the housing further includes heat-sink-wings (132, 133), continuous with the standing walls, bent in the long-edge direction, extending in the long-edge direction at an opposite side of the long-edge wall with respect to the sloped face, and facing the sloped face.

2. A light source device comprising,
a housing (101) that is formed by a sheet metal with good heat dissipation and includes a floor, standing walls (144, 145) bent inwards from the floor and standing off the floor, and a sloped face (120) provided in a direction orthogonal to the standing walls and bent inwards at a designated angle from the floor, having a reflecting member (102) laid thereon; a light guide (108), placed on the inner side of the housing and extending in a direction orthogonal to the standing walls that is adapted to output primary light that is output towards an irradiated part, and secondary light that is output towards the sloped face and is adapted to reflect off the sloped face and to irradiate the irradiated part;
wherein the floor has a rectangular shape, and the housing further includes a long-edge wall bent inwards from the floor along one of the long edges of the floor, and
wherein the standing walls are bent inwards form the floor along the short edges of the floor, the sloped face is bent inwards from the floor along the other long edge of the floor at a designated angle with respect to the short-edge direction of the floor, the light source device being **characterised in that** light emitters (156, 157) are provided opposite the ends of the light guide in a direction orthogonal to the standing walls and placed in contact with the standing walls, and **in that** the housing further includes heat-sink-wings (132, 133), continuous with the standing walls, bent in the long-edge direction, extending in the long-edge direction at an opposite side of the sloped face with respect to the long-edge wall, and facing the long-edge wall.

## Patentansprüche

1. Lichtquellenvorrichtung, aufweisend
ein Gehäuse (101), das aus einem Blech mit guter Wärmeableitung gebildet ist und einen Boden, stehende Wände (144, 145), die von dem Boden nach innen gebogen sind und von dem Boden abstehen, und eine schräge Fläche (120) aufweist, die in einer Richtung orthogonal zu den stehenden Wänden und in einem bestimmten Winkel von dem Boden nach innen gebogen angebracht ist und auf der ein reflektierendes Element (102) liegt; einen Lichtleiter (108), der an der Innenseite des Gehäuses angeordnet ist und sich in einer Richtung orthogonal zu den stehenden Wänden erstreckt, der dazu ausgelegt ist, primäres Licht, das in Richtung eines bestrahlten Teils ausgegeben wird, und sekundäres Licht, das in Richtung der schrägen Fläche ausgegeben wird, auszugeben und dazu ausgelegt ist, von der schrägen Fläche zu reflektieren und den bestrahlten Teil zu bestrahlen; wobei der Boden eine rechteckige Form hat, und das Gehäuse ferner eine langkantige Wand aufweist, die von dem Boden entlang einer der langen Kanten des Bodens nach innen gebogen ist, und wobei die stehenden Wände vom Boden längs kurzen Kanten des Bodens nach innen gebogen sind, und die schräge Fläche von dem Boden entlang der anderen langen Kante des Bodens in einem bestimmten Winkel in Bezug auf die Richtung der kurzen Kante des Bodens nach innen gebogen ist,
wobei die Lichtquellenvorrichtung **dadurch gekennzeichnet ist, dass** Lichtemitter (156, 157) an entgegengesetzten Enden des Lichtleiters in einer Richtung orthogonal zu den stehenden Wänden angeordnet und in Kontakt mit den stehenden Wänden angebracht sind, und
dass das Gehäuse ferner Kühlkörper-Flügel (132, 133) aufweist, die mit den stehenden Wänden durchgehend sind, in der Langkantenrichtung gebogen sind, sich in der Langkantenrichtung an einer gegenüberliegenden Seite der langkantigen Wand in Bezug auf die schräge Fläche erstrecken und der schrägen Fläche zugewandt sind.

2. Lichtquellenvorrichtung, aufweisend
ein Gehäuse (101), das aus einem Blech mit guter Wärmeableitung gebildet ist und einen Boden, stehende Wände (144, 145), die von dem Boden nach innen gebogen sind und von dem Boden abstehen, und eine schräge Fläche (120) aufweist, die in einer Richtung orthogonal zu den stehenden Wänden und in einem bestimmten Winkel von dem Boden nach innen gebogen angebracht ist und auf der ein reflektierendes Element (102) liegt; einen Lichtleiter (108), der an der Innenseite des Gehäuses angeordnet ist und sich in einer Richtung orthogonal zu den stehenden Wänden erstreckt, der dazu ausgelegt ist, primäres Licht, das in Richtung eines bestrahlten Teils ausgegeben wird, und sekundäres Licht, das in Richtung der schrägen Fläche ausgegeben wird, auszugeben und dazu ausgelegt ist, von der schrägen Fläche zu reflektieren und den bestrahlten Teil zu bestrahlen; wobei der Boden eine rechteckige Form hat, und das Gehäuse ferner eine langkantige Wand aufweist, die von dem Boden entlang einer der langen Kanten des Bodens nach innen gebogen ist, und wobei die stehenden Wände vom Boden längs der kurzen Kanten des Bodens nach innen gebogen sind, und die schräge Fläche von dem Boden entlang der anderen langen Kante des Bodens in einem bestimmten Winkel in Bezug auf die Richtung der kurzen Kante des Bodens nach innen gebogen ist,
wobei die Lichtquellenvorrichtung **dadurch gekennzeichnet ist, dass** Lichtemitter (156, 157) gegenüberliegend zu den Enden des Lichtleiters in einer Richtung orthogonal zu den stehenden Wänden angeordnet und in Kontakt mit den stehenden Wänden angebracht sind, und
dass das Gehäuse ferner Kühlkörper-Flügel (132, 133) aufweist, die mit den stehenden Wänden durchgehend sind, in der Langkantenrichtung gebogen sind, sich in der Langkantenrichtung an einer gegenüberliegenden Seite der schrägen Fläche in Bezug auf die langkantige Wand erstrecken und der langkantigen Wand zugewandt sind.

## Revendications

1. Dispositif source de lumière, comprenant :
un boîtier (101) qui est formé par une tôle métallique présentant une bonne dissipation de la chaleur et qui inclut un plancher, des parois verticales (144, 145) pliées vers l'intérieur à partir du plancher et se dressant à partir du plancher, et une face inclinée (120) prévue dans une direction orthogonale aux parois verticales et pliée vers l'intérieur à un angle désigné à partir du plancher, sur laquelle est posé un élément réfléchissant (102) ;
un guide de lumière (108), placé sur le côté intérieur du boîtier et s'étendant dans une direction orthogonale aux parois verticales, qui est adapté à émettre une lumière primaire qui est émise vers une partie irradiée, et une lumière secondaire qui est émise vers la face inclinée et est adaptée à se réfléchir sur la face inclinée et à irradier la partie irradiée ;
dans lequel le plancher a une forme rectangulaire et le boîtier inclut en outre une paroi de bord long pliée vers l'intérieur à partir du plancher le long de l'un des bords longs du plancher, et dans lequel les parois verticales sont pliées vers l'intérieur à partir du plancher le long de bords courts du plancher, et la face inclinée est pliée vers l'intérieur à partir du plancher le long de l'autre bord long du plancher à un angle désigné par rapport à la direction de bord court du plancher,
le dispositif source de lumière étant **caractérisé en ce que** des émetteurs de lumière (156, 157) sont prévus sur des côtés opposés du guide de lumière dans une direction orthogonale aux parois verticales et placés en contact avec les parois verticales, et **en ce que** le boîtier inclut en outre des ailes de dissipation de chaleur (132, 133), continues avec les parois verticales, pliées dans la direction de bord long, s'étendant dans la direction de bord long sur un côté opposé de la paroi de bord long par rapport à la face inclinée, et faisant face à la face inclinée.

2. Dispositif source de lumière, comprenant,
un boîtier (101) qui est formé par une tôle métallique présentant une bonne dissipation de la chaleur et qui inclut un plancher, des parois verticales (144, 145) pliées vers l'intérieur à partir du plancher et se dressant à partir du plancher, et une face inclinée (120) prévue dans une direction orthogonale aux parois verticales et pliée vers l'intérieur à un angle désigné à partir du plancher, sur laquelle est posé un élément réfléchissant (102) ;
un guide de lumière (108), placé sur le côté intérieur du boîtier et s'étendant dans une direction orthogonale aux parois verticales, qui est adapté à émettre une lumière primaire qui est émise vers une partie irradiée, et une lumière secondaire qui est émise vers la face inclinée et est adaptée à se réfléchir sur la face inclinée et à irradier la partie irradiée ;
dans lequel le plancher a une forme rectangulaire et le boîtier inclut en outre une paroi de bord long pliée vers l'intérieur à partir du plancher le long de l'un des bords longs du plancher, et
dans lequel les parois verticales sont pliées vers l'intérieur à partir du plancher le long des bords courts du plancher, la face inclinée est pliée vers l'intérieur à partir du plancher le long de l'autre bord long du plancher à un angle désigné par rapport à la direction de bord court du plancher,
le dispositif source de lumière étant **caractérisé en ce que** des émetteurs de lumière (156, 157) sont prévus à l'opposé des extrémités du guide de lumière dans une direction orthogonale aux parois verticales et placés en contact avec les parois verticales, et **en ce que** le boîtier inclut en outre des ailes de dissipation de chaleur (132, 133), continues avec les parois verticales, pliées dans la direction de bord long, s'étendant dans la direction de bord long sur un côté opposé de la face inclinée par rapport à la paroi de bord long, et faisant face à la paroi de bord long.
